# EUROPEAN PATENT SPECIFICATION

(11) **EP 0 705 176 B1**
(45) Date of publication and mention of the grant of the patent: **16.04.1997**
(21) Application number: 94916336.4
(22) Date of filing: 31.05.1994
(51) Int. Cl.: B60J 7/12, E05F 15/02

(54) **A PRESSURE FLUID CONTROL SYSTEM**
STEUERSYSTEM FÜR DRUCKFLÜSSIGKEIT
SYSTEME DE COMMANDE DU FLUIDE DE PRESSION

(30) Priority: 05.06.1993 GB 9311670
(43) Date of publication of application: 10.04.1996
(73) Proprietor: Rolls-Royce Motor Cars Limited, Crewe Cheshire CW1 3PL (GB)
(72) Inventor: RAWLINSON, Neil, Warmingham, Crewe, Cheshire CW11 9QP (GB)
(74) Representative: Downey, William Gerrard
(86) International application number: GB9401179
(87) International publication number: WO9429137

(56) References cited:
- EP-A- 0 309 066
- DE-A- 2 846 222
- DE-A- 3 826 789

## Description

The present invention relates to a pressure fluid control system. The system may be used particularly, but not exclusively, for the hood of an automobile.

In a known pressure fluid control system for the hood of a convertible of an automobile, the hood comprises a frame which is driven by hydraulic rams from a stowed to an extended position. The supply of hydraulic fluid to the rams is such that as pressure in the system falls, the flow rate increases. Gravity takes over at a position intermediate the stowed and fully extended position causing the pressure to fall and the flow rate therefore to increase. This in turn speeds up the extension of the frame and eventually causes the frame to crash into the windscreen header with possible damage to both header and hood.

According to the present invention there is provided a pressure fluid control system comprising a piston and cylinder device, means for supplying fluid under pressure to the device, and valve means for controlling the flow of pressure fluid from the means for supplying to the device, the valve means comprising a valve and is provided with a restrictor operative to control the supply of pressure fluid to the device and means for opening and closing the valve in response to a signal representing the position of an object controlled by the device.

In a preferred embodiment of the invention, the device is operative to drive an object between first and second positions. The object may, for example, be the frame of a hood of a convertible automobile. The system may be hydraulic or pneumatic. More than one device may be provided. In the case of the hood, two devices may be provided to drive the hood between stowed and extended positions and to tension the hood. The signal representing the position of the hood may be generated by a microswitch. Advantageously the switch is disposed on the rear cantrail pivot of the frame of the hood. The restrictor is advantageously variable. This may be achieved by moving a cone axially with respect to an orifice to produce an annular orifice of varying area.

In order that the invention may be more clearly understood, one embodiment thereof will now be described by way of example, with reference to the accompanying drawings, in which:-
Figure 1 shows an existing hydraulic circuit diagram for the motorised hood of a convertible automobile,
Figure 2 shows the diagram of Figure 1 modified according to the invention,
Figure 3 is a cross-sectional view of a valve block forming part of the system of Figure 2.
Figure 4 diagrammatically shows the frame of a hood mechanism from an automobile in a stowed condition.
Figure 5 diagrammatically shows the frame of Figure 4 partially extended,
Figure 6 diagrammatically shows the frame of Figures 4 and 5 fully extended, and
Figure 7 diagrammatically shows a vehicle hood of which the frame of Figures 4,5 and 6 forms part.

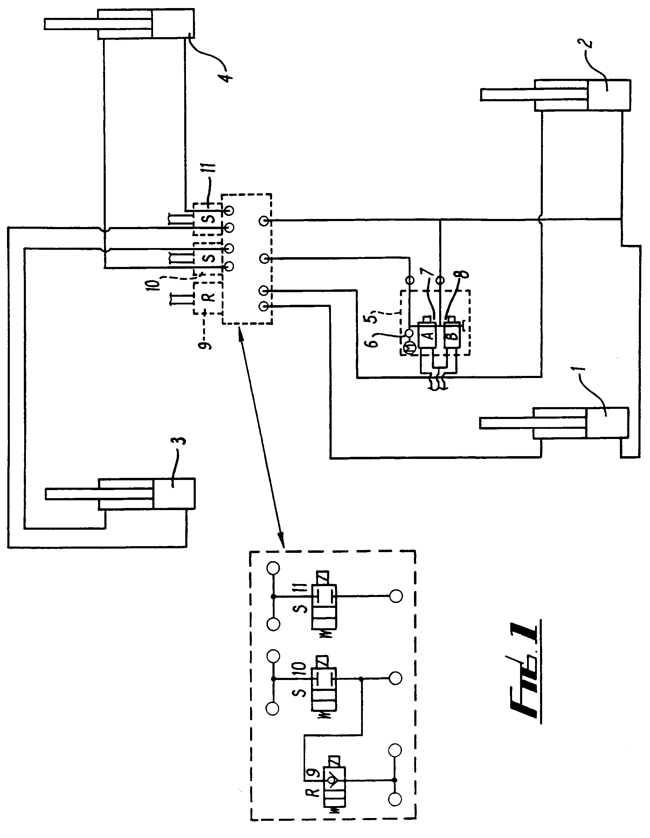

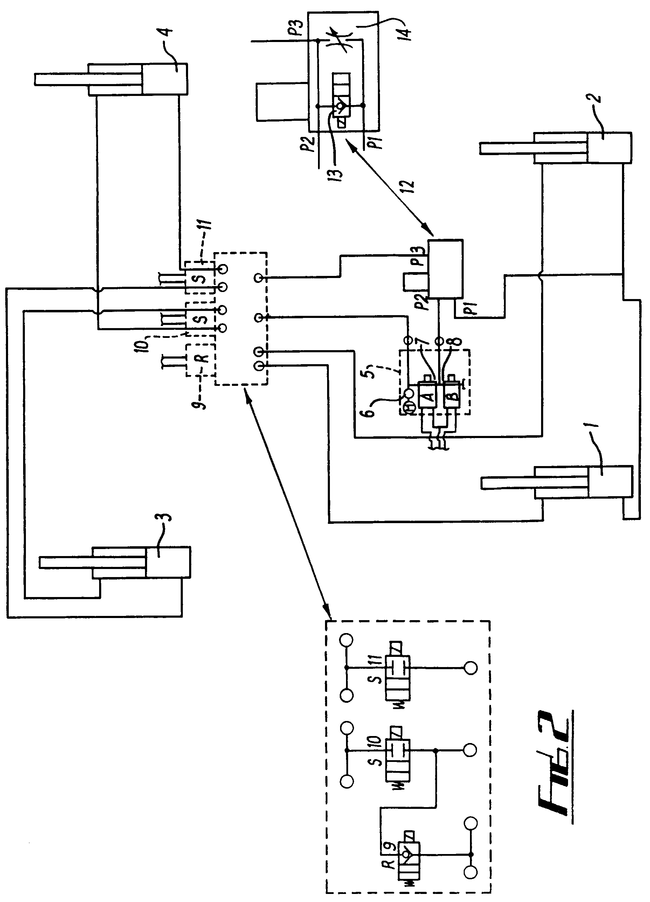

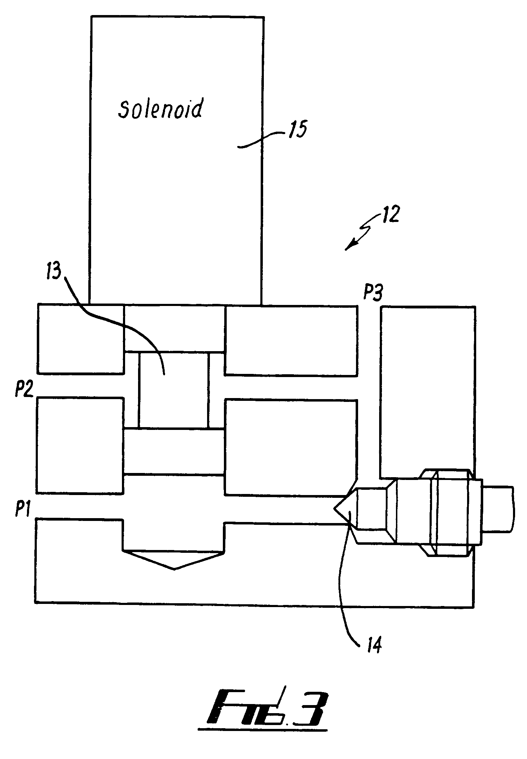

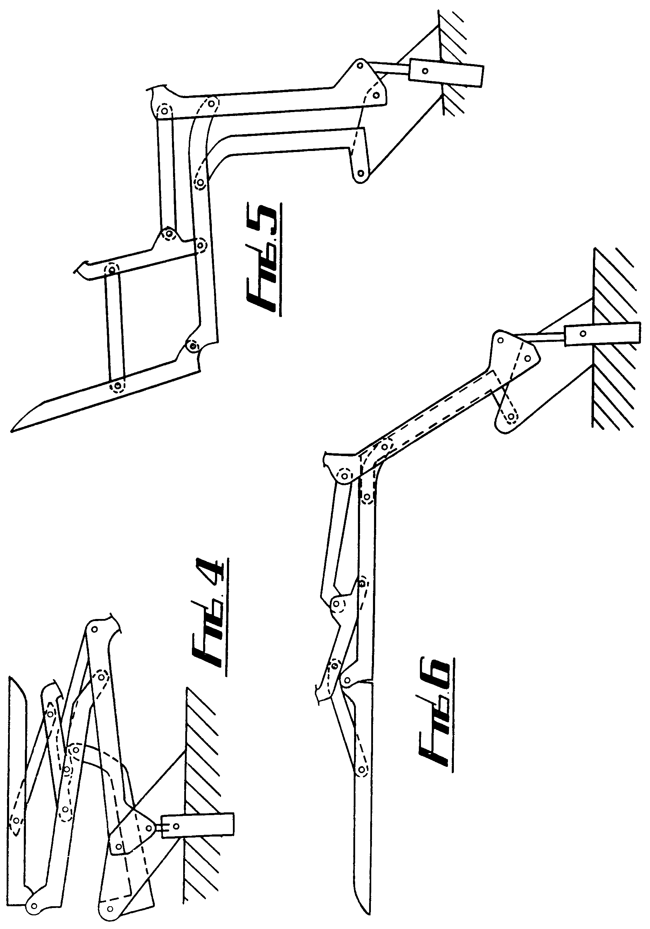

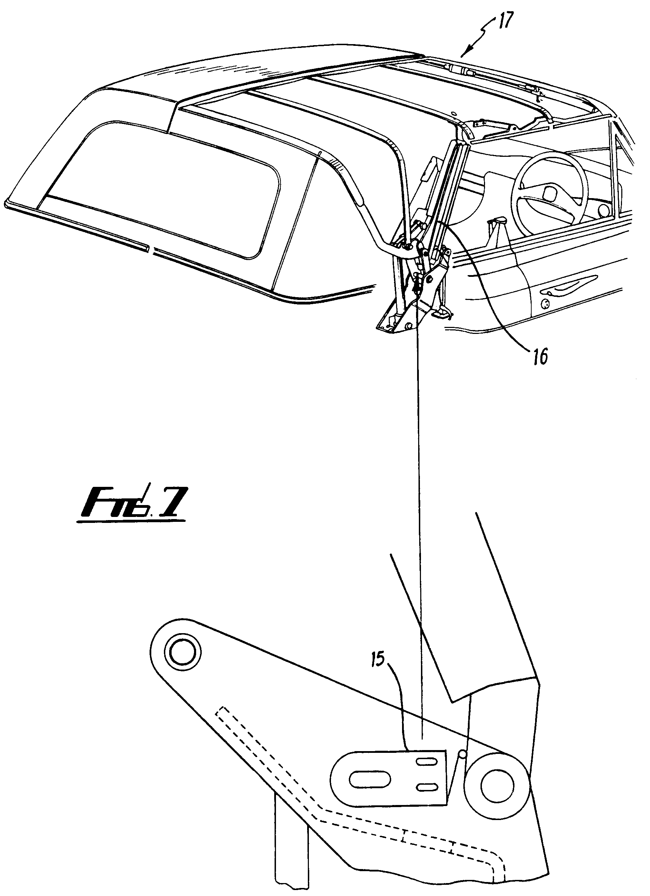

Referring to Figure 1, the existing hydraulic system has a pair of hydraulically operable hood rams 1 and 2 and a pair of hydraulically operable tensioning rams 3 and 4. The rams of each pair are disposed on opposite sides respectively of the hood. Hydraulic fluid is fed to these rams by means of an electrically operated power pack 5 comprising a d.c. motor driven pump 6 via appropriate hydraulic fluid lines which incorporate five lowering valves 7,8,9,10 and 11. The pressure/flowrate relationship of the system is such that the pressure fluid (hydraulic) flow rate increases as the pressure in the system falls. In operation of the hood hydraulic fluid is fed to the rams 1 and 2. Gravity begins to assist the extension of the hood frame when the frame reaches the position shown in Figure 5 from the stowed position shown in Figure 4. This causes the hydraulic fluid pressure to fall and the fluid flow rate to increase. This leads to the hood speeding up and eventually crashing into the automobile windscreen header with possible damage to both header and hood in the position shown in Figure 6.

Figure 2 shows the diagram of Figure 1 modified to overcome this problem. In the two figures equivalent parts bear the same reference numerals. The modification comprises a new valve block 12. This new block 12 comprises a two stage pressure lowering solenoid 15 operable valve 13 and a variable restrictor 14 connected in parallel with this valve. The valve 13 which is initially open as the hood is being raised is operated by a microswitch 15 which senses the position of the rear cantrail 16 of the frame 17 of the hood. When the cantrail reaches the position shown in Figure 5, the position in which gravity begins to take over, the microswitch 15 is activated to close valve 13. This creates a higher pressure in the system thereby lowering the hydraulic fluid flow rate and obviating crashdown. The back pressure may be adjusted by adjusting the restrictor 14.

The restrictor comprises a conical member which is axially adjustable with respect to an orifice. The area available for fluid flow is increased or decreased by moving the cone into or out of the orifice. The resultant annular orifice reduces any tendency there might otherwise be for a blockage to occur.

The block 12 has three ports respectively referenced P1, P2 and P3 in Figure 2. When valve 13 is opened electrically fluid flow is possible in both directions from both P2 and P3 to P1. When the valve is closed (deenergised) as described above, fluid flow is possible in the direction from P1 to P2 and P3 via valve 13 but not possible in the opposite direction so that any flow in this direction is via the restrictor 14.

## Claims

1. A pressure fluid control system comprising a piston and cylinder device (1,2), means for supplying fluid (5,6) under pressure to the device, and valve means (7,8,9,10,11) for controlling the flow of pressure fluid from the means for supplying to the device, characterised in that the valve means comprises a valve (7,8,9,10,11) and is provided with a restrictor (14) operative to control the supply of pressure fluid to the device and means for opening and closing the valve in response to a signal representing the position of an object controlled by the device.

2. A pressure fluid control system as claimed in claim 1, in which the restrictor is variable.

3. A pressure fluid control system as claimed in claim 1, in which the restrictor comprises a cone defining with a member an annular orifice.

4. A pressure fluid control system as claimed in claim 3, in which the cone is moveable with respect to the member to vary the area of the orifice.

5. A pressure fluid control system as claimed in any preceding claim, which is hydraulic.

6. A pressure fluid control system as claimed in any of claims 1 to 4 which is pneumatic.

7. A hood for an automobile comprising a pressure fluid control system as claimed in any preceding claim, in which the object controlled comprises a frame of the hood.

8. A hood as claimed in claim 7, in which there are two pressure fluid operable rams (1,2) disposed on opposite sides respectively of the hood operative to drive the hood been stowed and extended positions.

9. A hood as claimed in claim 7 or 8, in which there are two pressure fluid operable rams (3,4) disposed on opposite sides respectively of the hood operative to tension the hood.

10. A hood as claimed in claim 7,8 or 9, in which the means for supplying fluid under pressure comprises an electric motor driven pump (6).

11. A hood as claimed in claim 7,8,9 or 10, in which a microswitch (15) is disposed for actuation by the hood operative to generate the signal representing the position of the hood.

12. A hood as claimed in claim 11, in which the valve means comprise a number of lowering valves (7,8,9,10 and 11) which are disposed in fluid lines to the piston and cylinder device (1,2,3,4) and a two stage pressure lowering solenoid operable valve 13 and the variable restrictor (14) is connected in parallel with this valve, the arrangement being such that after the hood is initially extended the microswitch (15) is activated to close the solenoid operable valve (13) creating a higher pressure in the system thereby lowering the hydraulic fluid flow rate and obviating crashdown of the hood.

## Patentansprüche

1. Steuersystem für ein Druckmittel mit einer aus Kolben und Zylinder bestehenden Vorrichtung (1,2), mit Mitteln (5,6) zur Zuführung eines unter Druck stehenden Druckmittels nach der Kolben-Zylinder-Vorrichtung und mit Ventilmitteln (7,8,9,10,11) zur Steuerung der Druckmittelströmung von den Mitteln zur Zuführung nach der Kolben-Zylinder-Vorrichtung,
dadurch gekennzeichnet, daß die Ventilmittel ein Ventil (7,8,9,10,11) aufweisen und mit einer Drossel (14) versehen sind, um die Zuführung von Druckmittel nach der Kolben-Zylinder-Vorrichtung zu steuern, und daß Mittel vorgesehen sind, um das Ventil gemäß einem Signal zu öffnen und zu schließen, welches die Stellung eines von der Kolben-Zylinder-Vorrichtung gesteuerten Gegenstandes repräsentiert.

2. Steuersystem für ein Druckmittel nach Anspruch 1, bei welchem die Drossel variabel ist.

3. Steuersystem für ein Druckmittel nach Anspruch 1, bei welchem die Drossel einen Konus aufweist, der zusammen mit einem Ventilkörper eine Ringöffnung definiert.

4. Steuersystem für ein Druckmittel nach Anspruch 3, bei welchem der Konus gegenüber dem Ventilkörper beweglich ist, um die Querschnittsfläche der Öffnung zu ändern.

5. Steuersystem für ein Druckmittel nach einem der vorhergehenden Ansprüche, bei welchem das Druckmittel ein Hydraulikmittel ist.

6. Steuersystem für ein Druckmittel nach einem der Ansprüche 1 bis 4, bei welchem das Druckmittel ein Pneumatikmittel ist.

7. Verdeck für ein Automobil, welches ein Druckmittel-Steuersystem nach einem der vorhergehenden Ansprüche aufweist, wobei der gesteuerte Gegenstand der Rahmen des Verdecks ist.

8. Verdeck nach Anspruch 7, bei welchem zwei durch Druckmittel betätigbare Kolbenantriebe (1,2) auf gegenüberliegenden Seiten des Verdecks angeordnet sind, welche das Verdeck in die Verstaustellung und die ausgefahrene Stellung überführen.

9. Verdeck nach den Ansprüchen 7 oder 8, bei welchem zwei durch ein Druckmittel betätigbare Kolbenantriebe (3,4) auf gegenüberliegenden Seiten des Verdecks angeordnet sind, um das Verdeck zu spannen.

10. Verdeck nach den Ansprüchen 7,8 oder 9, bei welchem die Mittel zur Zuführung des Druckmittels aus einer elektromotorisch angetriebenen Pumpe (6) bestehen.

11. Verdeck nach den Ansprüchen 7,8,9 oder 10, bei welchem ein Mikroschalter (15) vorgesehen ist, der durch die Haube betätigbar ist, und ein Signal erzeugt, welches die Stellung des Verdecks repräsentiert.

12. Verdeck nach Anspruch 11, bei welchem die Ventilmittel mehrere Absenkventile (7,8,9,10 und 11) aufweisen, die in Strömungsmittelleitungen liegen, die nach der Kolben-Zylinder-Vorrichtung (1,2,3,4) führen, und ein zweistufiges durch einen Druckabsenk- Elektromagneten betätigbares Ventil (13) und die variable Drossel (14) parallel zu dem Ventil geschaltet sind, wobei die Anordnung derart getroffen ist, daß nach dem anfänglichen Ausfahren des Verdecks der Mikroschalter (15) aktiviert wird, um das elektromagnetisch betätigbare Ventil (13) zu schließen, wodurch ein höherer Druck in dem System erzeugt wird, und dadurch die hydraulische Strömungsrate abgesenkt und ein Zusammenstürzen des Verdecks verhindert wird.

## Revendications

1. Système de commande à fluide sous pression comprenant un dispositif à piston et cylindre (1,2), des moyens (5, 6) d'alimentation en fluide sous pression au dispositif, et des moyens de réglage (7, 8, 9, 10, 11) pour commander l'écoulement à fluide sous pression venant des moyens d'alimentation au dispositif, caractérisé par le fait que les moyens de réglage comprennent une soupape (7, 8, 9, 10, 11) et sont dotés d'un limiteur (14) agencé pour commander l'alimentation en fluide sous pression au dispositif, et des moyens d'ouverture et de fermeture de la soupape en réponse à un signal représentant la position d'un objet commandé par le dispositif.

2. Système de commande à fluide sous pression selon la revendication 1, dans lequel le limiteur est variable.

3. Système de commande à fluide sous pression selon la revendication 1, dans lequel le limiteur comprend un cône définissant, avec un opercule, un orifice annulaire.

4. Système de commande à fluide sous pression selon la revendication 3, dans lequel le cône est déplaçable par rapport à l'opercule afin de modifier l'aire de l'orifice.

5. Système de commande à fluide sous pression selon l'une quelconque des revendications précédentes, et qui est hydraulique.

6. Système de commande à fluide sous pression selon l'une quelconque des revendications de 1 à 4, et qui est pneumatique.

7. Capote escamotable pour automobile, comprenant un système de commande à fluide sous pression selon l'une quelconque des revendications précédentes, dans laquelle l'objet commandé comprend une structure appartenant à la capote.

8. Capote selon la revendication 7, dans laquelle sont prévus deux coulisseaux (1, 2), susceptibles de fonctionner avec du fluide sous pression, disposés sur les côtés opposés respectifs de la capote, agencés pour replier et déployer la capote.

9. Capote selon la revendication 7 ou 8, dans laquelle sont prévus deux coulisseaux (3, 4), susceptibles de fonctionner avec du fluide sous pression, disposés sur les côtés opposés respectifs de la capote, agissant pour tendre la capote.

10. Capote selon la revendication 7, 8 ou 9, dans laquelle les moyens d'alimentation en fluide sous pression comprennent une pompe (6) entraînée par un moteur électrique.

11. Capote selon la revendication 7, 8, 9 ou 10, dans laquelle un micro-commutateur (15) est disposé afin d'être actionné par la capote, et est agencé pour générer le signal représentant la position de la capote.

12. Capote selon la revendication 11, dans laquelle les moyens de réglage comprennent un certain nombre de soupapes de restriction (7, 8, 9, 10 et 11) qui sont disposées sur des conduits à fluide allant au dispositif à piston et cylindre (1, 2, 3, 4) et une soupape (13) à deux étages susceptible d'être activée par un électro-aimant de diminution de pression et le limiteur variable (14) est relié en parallèle avec cette soupape, l'agencement étant tel qu'une fois que la capote est initialement tendue, le micro-commutateur (15) est activé afin de fermer la soupape (13) activée par électro-aimant, créant ainsi une pression supérieure dans le système, de manière à diminuer la vitesse d'écoulement du fluide hydraulique, et à éviter l'effondrement de la capote.
